# EUROPÄISCHE PATENTANMELDUNG

(11) **EP 1 970 497 A2**
(43) Veröffentlichungstag der Anmeldung: **17.09.2008**
(21) Anmeldenummer: 08004231.0
(22) Anmeldetag: 07.03.2008
(51) Int. Cl.: E04C 1/42, E04C 2/54

(54) **Beleuchtetes Bauteil und Verfahren zu seiner Herstellung**

(30) Priorität: 13.03.2007 DE 102007012583
(71) Anmelder: LUCCON Lichtbeton GmbH, 6833 Klaus (AT)
(72) Erfinder: Frei, Jürgen, 6850 Dornbim (AT); Gast, Ingo, 76676 Graben-Neudorf (DE)
(74) Vertreter: Wagner, Jutta

(57) **Zusammenfassung**

Die vorliegende Erfindung betrifft Bauteile aus einem Baustoff mit eingebetteten Lichtleitfasern, wobei das Bauteil zumindest eine Schicht aus dem Baustoff und eine Beleuchtungseinrichtung an einer Kante umfasst, wobei die eingebetteten Lichtleitfasern einen Lichtaustritt an der der Beleuchtungseinrichtung gegenüberliegenden Kante an einer zu der Beleuchtungseinrichtung senkrechten Oberfläche oder Frontseite oder an der Vorderkante oder Unterkante und der Oberfläche oder Frontseite ermöglichen.

## Beschreibung

Die vorliegende Erfindung betrifft ein Verfahren zur Herstellung beleuchteter Bauteile wie Treppen sowie nach dem Verfahren hergestellte Bauteile.

Es ist bekannt, Treppenstufen an bzw. in der senkrechten Fläche mit Beleuchtungseinrichtungen zu versehen. Dies wird insbesondere bei sicherheitsrelevanten Treppen durchgeführt. Allerdings lassen diese Gestaltungen in ästhetischer Hinsicht oft zu wünschen übrig. Auch die Ausleuchtung ist nicht immer optimal.

Weiterhin ist es bekannt, in die Fugen zwischen Fliesen Beleuchtungseinrichtungen in Form von LED einzulassen, wodurch sich ästhetisch ansprechende Gestaltungen erreichen lassen.

Bei all diesen Lösungen liegt jedoch die Beleuchtungseinrichtung an der Oberfläche und ist dementsprechend hohen Belastungen ausgesetzt. Gerade bei einer Beleuchtung mit einer Vielzahl LEDs ist zudem die Verkabelung aufwändig.

Es besteht daher weiter Bedarf an ökonomischen und gleichzeitig ästhetisch ansprechenden Lösungen.

Überraschend wurde nun gefunden, dass sich durch die Einbettung von Lichtleitfasern in Treppenstufen Treppen herstellen lassen, welche mittels hinter der Stufe liegenden Beleuchtungseinrichtungen beleuchtbar sind. Dieses Prinzip ermöglicht auch eine Beleuchtung von Wandflächen wie z.B.: Wandtafeln, Trennwänden etc. und ist somit allgemein für die Schaffung von beleuchteten Bauteilen einsetzbar.

Die obige Aufgabe wird demgemäss gelöst durch ein verfahren zur Herstellung von Bauteilen aus einem Baustoff mit eingebetteten Lichtleitfasern, welche an einer Seite von einer Beleuchtungseinrichtung mit Licht bestrahlt werden und dieses an zumindest einer anderen Seite wieder abstrahlen.

Die Seiten des Bauteiles werden dabei wie folgt bezeichnet, wobei von Plattenförmigen Bauteilen, d.h. einer im Vergleich zu Breite und Höhe geringen Tiefe, ausgegangen wird. Die Oberfläche oder Frontseite ist hier eine der beiden senkrecht zur Einstrahlung des Lichtes angeordneten Außenflächen des Bauteiles. Zum Beispiel bei Treppenstufen die obere Fläche und bei senkrecht angeordneten Platten die vordere Fläche. Mit Kante wird eine de>r seitlichen Flächen bezeichnet, an der die Beleuchtungseinrichtung angeordnet wird. Mit Vorderkante oder Unterkante wird die dieser Kante gegenüberliegende seitliche Fläche bezeichnet.

Die Lichtleitfasern werden unter einem Winkel von mehr als 0 aber weniger als 90 ° zu einer Oberfläche des Bauteiles eingebaut und ermöglichen einen Lichtaustritt auf dieser Oberfläche und einer weiteren Seite. Vorteilhaft beträgt der Winkel von etwa 0,5 bis 45 °, insbesondere von 1 bis 25 °.

Lichtdurchlässige Bauteile aus hydraulischen Massen wie Zement sind z.B. aus DE 93 10 500 U und WO 03/097954 bekannt. In diesen Druckschriften werden Lichtleitfasern parallel zu einer Oberfläche eingebaut. Damit wird Licht, welches auf die Lichtleitfasern trifft parallel zur Richtung der Fasern wieder abgestrahlt.

Erfindungsgemäß werden solche Bauteile nun mit einer Beleuchtungseinrichtung kombiniert, so dass nicht nur Tageslicht oder Licht von einer Raumbeleuchtung weitergeleitet wird, sondern ein Bauteil mit einer gezielten Beleuchtung geschaffen ist.

Mit solchen Bauteilen lassen sich somit Treppenstufen herstellen, bei denen nur entweder die Oberseite oder die Frontkante beleuchtet ist. Im Vergleich zu den bekannten Treppen ergibt sich der große Vorteil, dass sich die Beleuchtungseinrichtung an der Hinterkante oder Unterseite der Treppenstufe befindet und somit weder einen Schutz vor Verschmutzung noch irgendwelche besondere Auslegung hinsichtlich einer mechanischen Belastung benötigt.

Erfindungsgemäß verlaufen die Lichtleitfasern vorzugsweise unter einem Winkel zur Oberfläche. Damit enden einige der Lichtleitfasern in der Oberfläche und andere in der Frontkante, so dass beide Flächen beleuchtet sind. Je nach Anordnung der Beleuchtungseinrichtung und Winkel der Lichtleitfasern zur Oberfläche wird dabei der größere Anteil Licht an der Oberfläche oder an der Frontkante abgestrahlt. Bei flachen Winkeln und einer Beleuchtung von hinten tritt mehr Licht an der Frontkante aus, bei einer Beleuchtung von unten und einem größeren Einbauwinkel der Lichtleitfasern tritt mehr Licht an der Oberfläche aus.

Mit den erfindungsgemäßen Treppenstufen ist es besonders gut möglich, freitragende Treppen mit Beleuchtung auszuführen, da die Beleuchtungseinrichtung nicht in einer senkrechten Fläche der Treppe sondern direkt an der Stufe angeordnet ist. Zudem ist bei solchen Treppen auch die Anbringung der Beleuchtungseinrichtung sowie ein evtl. nötiger Austausch des Leuchtmittels sehr einfach. Dazu ergeben sich vielfältige Gestaltungsmöglichkeiten hinsichtlich einer weiteren Nutzung der Beleuchtungseinrichtung für den unter der Treppe befindlichen Raum. So kann diese auch gleichzeitig als herkömmliche Lichtquelle für diesen Raum dienen.

In einer weiteren Ausführungsform wird die Treppenstufe zusätzlich auch an der vorderen Kante mit einer Beleuchtungseinrichtung versehen, so dass Licht nach oben und unten abgestrahlt wird. Ein Lichtaustritt aus der Vorderkante kann hierbei in an sich bekannter Weise durch direkte Nutzung des Lichtes der vorderen Beleuchtungseinrichtung realisiert werden.

Als Beleuchtungseinrichtung eignen sich prinzipiell alle bekannten Vorrichtungen. Bevorzugt werden, soweit es nur um die Beleuchtung der Treppenoberfläche und/oder Forderkante geht energiesparende und langlebige Leuchtmittel wie Leuchtstoffröhren oder LED.

Die Installation und der Anschluss von Beleuchtungseinrichtungen ist dem Fachmann an sich bekannt und erfolgt in üblicher Weise.

Die Aktivierung der Beleuchtungseinrichtung(en) erfolgt ebenfalls in an sich bekannter Weise, z.B. durch Schalter, Bewegungsmelder, zeitgesteuert etc., entsprechend den jeweiligen Anforderungen und Bedürfnissen.

Als Basis für die Treppenstufen eignen sich alle bekannten Baustoffe, welche eine Einbettung von Lichtleitfasern erlauben, insbesondere hydraulisch abbindende Bindemittel wie Zement und Gips. Diese sind bevorzugt, da sie konstruktiv eine große Vielfalt und hohe Belastbarkeit gewährleisten.

Als hydraulisches Bindemittel eignet sich z.B. Zement. Geeignete Zemente sind beispielsweise Portlandzement, Portlandhüttenzement, Portlandflugaschezement, Portlandkalksteinzement, Portlandkompositzement und Hochofenzement. Besonders bevorzugt sind Portlandzement und Portlandhüttenzement. Besonders bevorzugt sind auch farbige und weiße Zemente als Basis.

Das hydraulische Bindemittel kann in an sich bekannter Weise natürliche und/oder künstliche Gesteinskörnungen, Zusatzstoffe und/oder Zusatzmittel enthalten.

Zusatzstoffe sind beispielsweise natürliche und künstliche Puzzolane, Farbpigmente, Kunststoffdispersionen, Gesteinsmehle etc., typische Mengen sind z.B. 3 bis 8 Gew.-% für Farbpigmente und bis zu 30 Gew.-% für Flugasche, Gesteinsmehle etc.

Zusatzmittel sind z.B. Luftporenbildner, Verflüssiger, Fließmittel, Beschleuniger, Verzögerer etc. Soweit vorhanden werden Mengen von jeweils bis zu 5 Gew.-%, in Einzelfällen von bis zu 10 Gew.-% eingesetzt.

Als Gesteinskörnung kann im Prinzip Sand, Kies oder Splitt verwendet werden. Zum Erreichen einer gleichmäßigen und dichten Verteilung der lichtleitenden Fasern haben sich Sandmischungen mit einem Größtkorn von etwa 2 mm bewährt. Das Massenverhältnis von Zement zu Sand liegt in der Regel zwischen 1:1 und 1:3.

Als Lichtleitfasern kommen in Betracht: textile Glasfasern, Kunststofffasern, etc. Statt einzelner Fasern können auch Matten, Gelege, Rovings oder besonders bevorzugt Gewebe eingebaut werden, im Folgenden kurz als Fasern bezeichnet.

Es versteht sich, dass die Fasern und der Baustoff miteinander verträglich sein müssen, wie dies beispielsweise bei den bekannten Lichtleitfasern aus Silikatglas und Zement der Fall ist.

Weiterhin ist der Anteil der Fasern in dem Baustoff so abzustimmen, dass die geforderte Festigkeit und Belastbarkeit der Stufe gewährleistet ist. Im Falle von Lichtleitfasern in Zement eignen sich im Hinblick auf den optischen Eindruck beispielsweise Anteile von 2 bis 10 Vol.-%, vorzugsweise 5 bis 8 Vol.-%, mit denen eine befriedigende Lichtausbeute erzielt wird.

Die Treppenstufen können mit lichtdurchlässigen Beschichtungen versehen werden. Beispielsweise lässt sich so eine besonders glatte Oberfläche erreichen, die sich besonders gut reinigen lässt.

Im Außenbereich kann es bevorzugt sein, dass die Stufen eine gewisse Rauhigkeit aufweisen, da so die Rutschgefahr vermindert ist.

An den Flächen, an welchen kein Lichtaustritt erfolgen soll, können natürlich auch in bekannter Weise Fliesen, Kunststoffbodenbeläge, Teppich etc. aufgebracht werden. Dies wird insbesondere bei nur an der Vorderkante beleuchteten Stufen der Fall sein.

Die erfindungsgemäßen Treppenstufen können auf eine Treppe aufgelegt werden, analog zu anderen Belägen wie Fliesen, Naturstein etc. bzw. auch im Wechsel mit solchen Belägen.

Eine weitere Möglichkeit ist die Konstruktion der Treppe aus Treppenstufen mit eingebetteten Lichtleitfasern in der gesamten Stufe, was, wie bereits erwähnt, bei freitragenden Treppen besonders bevorzugt ist.

In einer dritten Variante ist es möglich, die Treppenstufen aus einer ersten, oberen Schicht mit Lichtleitfasern und einer zweiten unteren Schicht ohne Lichtleitfasern herzustellen. Auf diese Weise ergibt sich ein sehr sparsamer Einsatz des im Verhältnis kostenintensiveren Baustoffes mit Lichtleitfasern. Schließlich kann die Stufe auch aus einer mittleren Tragschicht, vorzugsweise ohne Lichtleitfasern, und zwei äußeren Schichten mit Lichtleitfasern bestehen. Die Fasern können hierbei gleiche oder unterschiedliche Winkel aufweisen. Es sind auch noch weitere Schichten denkbar, z.B. die oben erwähnte Beschichtung der Oberfläche. Die Verbindung der Schichten erfolgt in an sich bekannter Weise.

Mit den erfindungsgemäßen Bauteilen kann auch die Beleuchtung von Treppenstufen auf der Oberfläche, an der Vorderkante und in der Senkrechten mittels ein und derselben Beleuchtungseinrichtung realisiert werden. Hierzu sind die senkrechten Bauteile der Treppe mit winklig eingebetteten Lichtleitfasern auszustatten und die Beleuchtungseinrichtung muss Licht nach vorne und oben abgeben. Dadurch leiten die Fasern in der Stufe das Licht nach vorne und auf die Stufenoberfläche, die Fasern in der Senkrechten leiten das Licht auf die Frontseite des senkrechten Bauteils.

Die erfindungsgemäßen Bauteile eignen sich in einer weiteren Ausführungsform als ein- oder zweiseitig Licht emittierende Platten, bei denen eine Beleuchtungsvorrichtung an der oder den Stirnseiten oder Seitenkanten eine Abstrahlung auf einer oder beiden senkrecht dazu stehenden Flächen ermöglicht. Bei dieser Ausführungsform verlaufen die Lichtleitfasern in dem Bauteil unter einem Winkel zur Oberfläche, so dass auf der/den im Verhältnis schmalen Stirnseite(n) oder Seitenkante(n) eingestrahltes Licht auf der/den Flächen austritt.

Bei dieser Ausführungsform ist es ebenfalls möglich, die Platten komplett aus Baustoff mit Lichtleitfasern herzustellen oder dünnere Platten auf Trägerplatten ohne Lichtleitfasern aufzubringen. In diesem Fall kann eine Trägerplatte entweder auf einer Seite oder in der Mitte zwischen zwei Schichten mit Lichtleitfasern angeordnet sein.

Solche Platten eignen sich beispielsweise als beleuchtete Wandtafeln oder Trennwände.

Die erfindungsgemäßen Stufen und Platten sind herstellbar, indem man Rohlinge aus Baustoff mit eingebetteten Lichtleitfasern herstellt und diese dann unter dem gewünschten Winkel aufsägt. Alternativ kann bei kleinen Winkeln auch die Oberfläche von planen Bauteilen unter dem gewünschten Winkel angeschliffen werden.

Die Herstellung der Rohlinge erfolgt in an sich bekannter Weise, indem Baustoff in eine Form eingebracht, Lichtleitfasern aufgelegt und eingearbeitet werden. Dieser Vorgang wird wiederholt, bis die gewünschte Stärke des Rohlings erreicht ist.

Alternativ können Lichtleitfasern in eine entsprechende Form eingelegt und mit dem Baustoff umgossen werden. Dies erfolgt ebenfalls schichtweise, d.h. zunächst wird eine Lage Fasern eingelegt, umgossen und dann die nächste Lage eingelegt und umgossen usw. bis die Form gefüllt ist.

In einer besonders bevorzugten Ausführungsform werden die Rohlinge gemäß DE 10 2006 007 920 hergestellt. Hierbei erfolgt die Zufuhr des Baustoffes mittels einer als Mörtelschlitten bekannten Vorrichtung und die Form besitzt einen beweglichen Boden, so dass die Fasern an der Oberfläche der Form gespannt werden können, bis sie in den Baustoff eingebaut sind. Gemäß dieser nicht vorveröffentlichten Anmeldung ist es auch möglich, Fasern und Baustoff gleichzeitig in die Form einzubringen, indem die Fasern ebenfalls über den Mörtelschlitten zugeführt werden.

Das Verhältnis von Lichtleitfasern zu Baustoff richtet sich nach der gewünschten Lichtausbeute und dem beabsichtigten optischen Eindruck, je mehr Fasern eingearbeitet werden, desto mehr Licht wird abgestrahlt. Die Abstrahlung verändert sich dabei von einer punktuellen in eine flächige Abstrahlung.

Zur Erzielung optischer Effekte ist ein relativ geringer Anteil Lichtleitfasern ausreichend, es ergeben sich Muster aus Lichtpunkten ähnlich wie dies mit dem Einbau von LED in Fiesenfugen erreicht wird. Allerdings ist mit den erfindungsgemäßen Bauteilen der Aufwand deutlich geringer und es ist eine viel höhere Anzahl Lichtpunkte möglich. Zudem entfällt die Begrenzung auf Fugen, die Lichtpunkte können im Prinzip nach Wunsch angeordnet werden.

In Bezug auf eine Beleuchtung von z.B. Treppen aus Sicherheitsgründen kann es bevorzugt sein, eine höhere Dichte von Lichtleitfasern einzusetzen und damit einer gleichmäßigere Lichtabstrahlung zu erreichen.

Die Erfindung soll anhand der folgenden Figuren weiter veranschaulicht werden, ohne sie jedoch auf die gezeigten Ausführungsformen zu beschränken.

Es zeigen:
Figur 1: eine Treppenstufe mit parallel zur Oberfläche verlaufenden Lichtleitfasern im Längsschnitt;
Figur 2: eine Treppenstufe mit unter einem Winkel verlaufenden Fasern im Längsschnitt;
Figur 3: eine weitere Stufe mit unter einem andern Winkel verlaufenden Fasern im Längsschnitt;
Figur 4: eine Stufe aus zwei Schichten im Längsschnitt;
Figur 5: eine Stufe mit Lichtabstrahlung oben und unten im Längsschnitt;
Figur 6: eine Platte mit unter einem Winkel verlaufenden Lichtleitfasern im Längsschnitt;
Figur 7: eine Platte mit beidseitigem Lichtaustritt im Längsschnitt;
Figur 8: eine weitere Platte mit beidseitigem Lichtaustritt im Längsschnitt;
Figur 9: eine Ansicht einer Treppe mit erfindungsgemäßen Stufen;
Figur 10: eine schematische Übersicht der Herstellung.

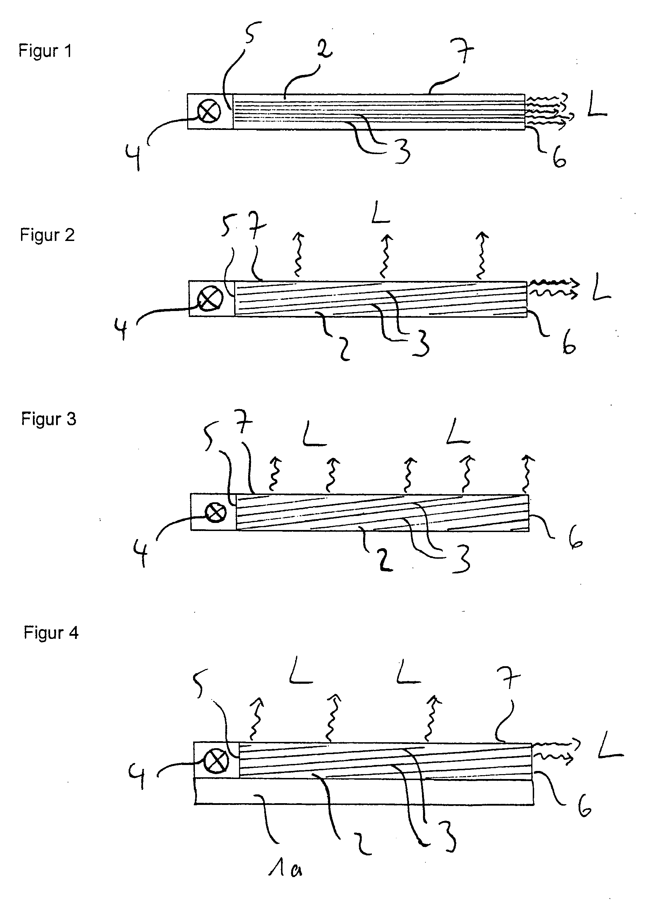

In Figur 1 ist eine einzelne Treppenstufe 1 aus einem Baustoff 2 und Lichtleitfasern 3 mit einer Beleuchtungseinrichtung 4 an der Hinterkante 5 schematisch im Längsschnitt gezeigt. Die Stufe strahlt bei Aktivierung der Beleuchtungseinrichtung 4 an der vorderen Kante 6 Licht L, symbolisiert durch die wellenförmigen Pfeile, ab. Der elektrische Anschluss der Beleuchtungseinrichtung 4 und Vorrichtungen zu ihrer Aktivierung sind aus Gründen der Übersichtlichkeit in dieser und den folgenden Figuren nicht dargestellt. Ebenso sind die Lichtleitfasern 3 zur besseren Erkennbarkeit nicht maßstabsgerecht eingezeichnet.

Figur 2 zeigt eine Treppenstufe 1, bei der die Lichtleitfasern 3 unter einem Winkel von 1,4 ° verlaufen. Gleiche Teile sind mit denselben Ziffern gekennzeichnet. Dadurch ergibt sich bei der hier gewählten Länge der Stufe 1 ohne Beleuchtungseinrichtung 4 von 34 cm ein Lichtaustritt L sowohl an der Vorderkante 6 als auch an der Oberfläche 7.

Die Figur 3 zeigt eine Stufe 1, bei der mit einem Winkel von 1,9 ° und einer Länge von 28 cm ein Lichtaustritt L nur an der Oberfläche 7 realisiert worden ist.

In Figur 4 ist die Treppenstufe 1 zweischichtig aufgebaut, eine Schicht 1 a dient als Träger und gewährleistet die notwendige statische Stabilität. Die Schicht 1 b enthält die Lichtleitfasern 3, hier in einem Winkel von 0,7 ° bei einer Länger der Stufe von 40 cm. Der Lichtaustritt L erfolgt wiederum an der Vorderkante 6 und der Oberfläche 7.

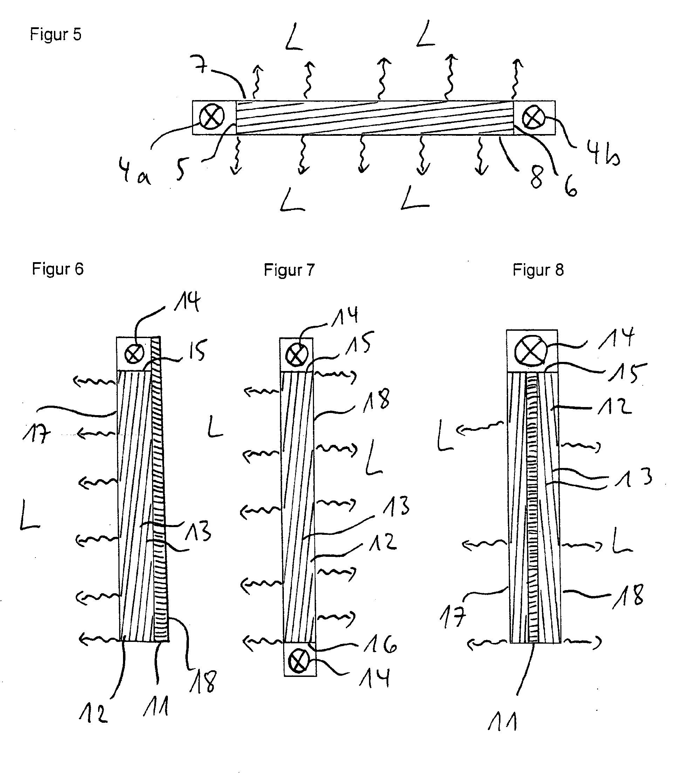

Die Stufe 1 in Figur 5 verfügt über zwei Lichtquellen 4, eine Beleuchtungseinrichtung 4a an der hinteren Kante 5 und eine Beleuchtungseinrichtung 4b an der vorderen Kante 6. Die Fasern 3 sind bei einer Länge der Stufe von 15 cm unter einem Winkel von 18,4 ° eingebaut, so dass der Lichtaustritt L an der Oberfläche 7 und der Unterseite 8 erfolgt. Bei dieser Ausführungsform ist es zweckmäßig den Winkel an die Länge der Stufe so anzupassen, dass kein Lichtaustritt an der vorderen bzw. hinteren Kante 5 bzw. 6 erfolgt, da dort die Beleuchtungseinrichtungen 4 sitzen und dieses Licht ohnehin nicht zu sehen wäre.

Die Figur 6 zeigt eine Platte 10 mit einer Frontseite 17 und einer Rückseite 18 sowie einer Oberkante 15 und einer Unterkante 16. An der Oberkante 15 ist eine Beleuchtungseinrichtung 14 vorgesehen. Die Platte 10 umfasst eine Trägerschicht 11 und eine Schicht aus Baustoff 12 mit Lichtleitfasern 13. Durch den Einbau der Lichtleitfasern unter einem Winkel stahlt die Platte an der Frontseite Licht L ab.

In Figur 7 ist eine Platte 10 mit beidseitigem Lichtaustritt L dargestellt. Hier entfällt der Träger 11, es ist eine zweite Beleuchtungseinrichtung 14 an der Unterkante 16 vorgesehen.

Die Platte 10 in Figur 8 zeigt eine Variante mit beidseitigem Lichtaustritt L, bei der zwei Schichten aus Baustoff 12 mit Lichtleitfasern 13 vorhanden sind, zwischen denen ein Träger 11 vorgesehen ist.

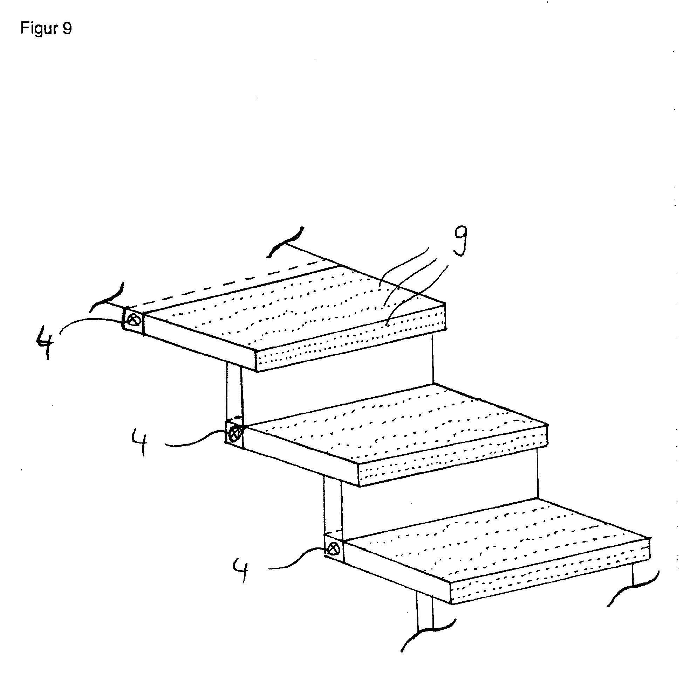

Die Figur 9 zeigt eine schematische Ansicht einer Treppe mit Stufe entsprechend Figur 2, wobei die Enden der Lichtleitfasern 3, aus denen das von der Beleuchtungseinrichtung 4 eingestrahlte Licht abgestrahlt wird, als Punkte 9 eingezeichnet sind.

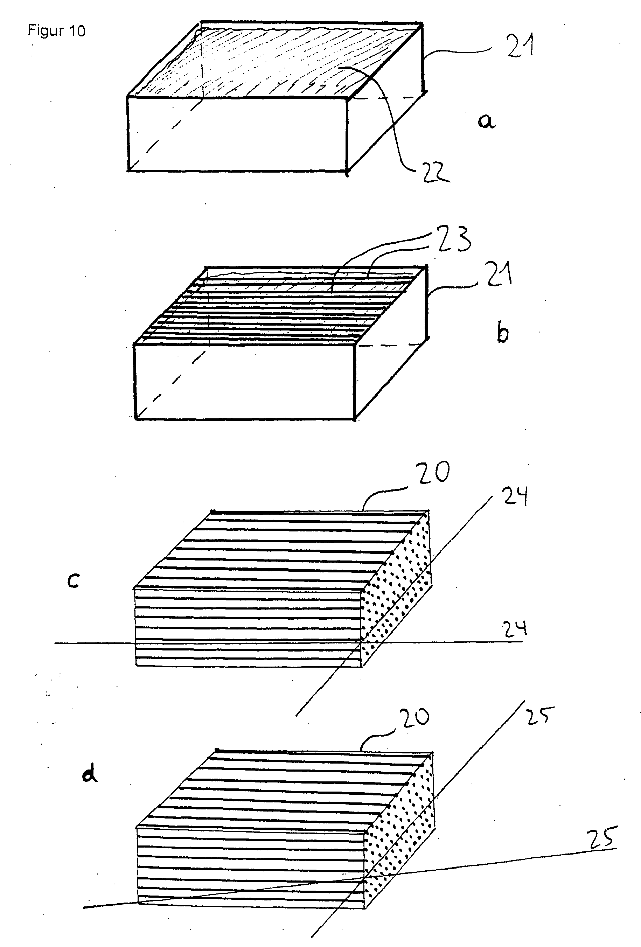

In Figur 10 ist die Herstellung der erfindungsgemäßen Bauteile veranschaulicht. In einem ersten Schritt werden Rohlinge 20 durch schichtweises Einbringen von Baustoff 22 und Lichtleitfasern 23 in eine Form 21 erzeugt, wie Teilfigur a und b gezeigt. Der Rohling 20 wird nach dem Erhärten entschalt, nicht dargestellt, und wie in Teilfigur c gezeigt entlang den Linien 24 zur Herstellung von Bauteilen mit parallelen Fasern oder wie in Teilfigur d gezeigt entlang den Linien 25 zur Herstellung von Bauteilen mit winkligen Fasern zersägt.

Die Oberfläche kann dann gewünschtenfalls mechanisch nachbearbeitet werden, etwa durch Schleifen, Polieren etc., oder auch mit einer Beschichtung versehen werden.

Anschließend erfolgt dann die Verbindung mit der/den Beleuchtungseinrichtung(en), entweder vor, gleichzeitig mit oder nach dem Einbau des Bauteils.

Mit den erfindungsgemäßen Bauteilen steht somit ein besonders einfaches Mittel zur Gestaltung von Treppen und Räumen mit Licht zur Verfügung. Es sind mannigfaltige Einsatzmöglichkeiten gegeben, insbesondere bei den Bauteilen mit unter einem Winkel verlaufenden Lichtleitfasern. Neben den bereits erwähnten Treppen und Wandtafeln lassen sich z.B. auch die Wände von Wasserbecken gestalten, wobei Probleme mit der Wasserdichtigkeit deutlich vermindert sind, da die Beleuchtung von oberhalb des Wasserspiegels möglich ist. In weiteren Anwendungen kann auch Tageslicht alternativ oder zusätzlich als Lichtquelle genutzt werden, beispielsweise im Bereich von Tiefgaragen oder Unterführungen.

### Bezugszeichenliste

- L: Lichtaustritt
- 1: Treppenstufe
- 1a Schicht: als Träger
- 1b: Licht-leitende Schicht
- 2: Baustoff
- 3: Lichtleitfasern
- 4: Beleuchtungseinrichtung
- 4a: Beleuchtungseinrichtung an der Hinterkante
- 4b: Beleuchtungseinrichtung an der Vorderkante
- 5: Hinterkante
- 6: Vorderkante
- 7: Oberfläche
- 8: Unterseite
- 10: Platte
- 11: Träger
- 12: Baustoff
- 13: Lichtleitfasern
- 14: Beleuchtungseinrichtung
- 15: Oberkante
- 16: Unterkante
- 17: Frontseite
- 18: Rückseite
- 20: Rohling
- 21: Form
- 22: Baustoff
- 23: Lichtleitfasern
- 24: Schnittebene für parallele Fasern
- 25: Schnittebene für winklige Fasern

## Patentansprüche

1. Verfahren zur Herstellung von Bauteilen, welche Licht senkrecht zur Richtung seiner Einstrahlung abstrahlen, wobei man einen Rohling herstellt indem in einer Form Baustoff und Lichtleitfasern eingebracht werden, wobei sich die Lichtleitfasern parallel zu einer Seite der Form von einem Ende der Form bis zu ihrem anderen Ende erstrecken, **dadurch gekennzeichnet, dass** man den Rohling (20) unter einem Winkel zu seiner Oberfläche zersägt, so dass zumindest ein Teil der Lichtleitfasern (3, 13) in dem Bauteil (1, 10) von einer Kante (5, 15) aus zu einer Oberfläche oder Frontseite (7, 17) verläuft.

2. Verfahren gemäß Anspruch 1, **dadurch gekennzeichnet, dass** ein Teil der Lichtleitfasern (3, 13) in dem Bauteil (1, 10) von der Kante (5, 15) zu der gegenüberliegenden Kante (6, 16) verläuft.

3. Bauteil aus einem Baustoff mit eingebetteten Lichtleitfasern herstellbar nach einem der Ansprüche 1 oder 2, **dadurch gekennzeichnet, dass** das Bauteil (1, 10) zumindest eine Schicht aus dem Baustoff (2, 12) und eine Beleuchtungseinrichtung (4, 14) an einer Kante (5, 15) umfasst, wobei die eingebetteten Lichtleitfasern (3, 13) einen Lichtaustritt an der der Beleuchtungseinrichtung (4, 14) gegenüberliegenden Kante (6, 16), an einer zu der Beleuchtungseinrichtung (4, 14) senkrechten Oberfläche oder Frontseite (7, 17) oder an der Vorderkante oder Unterkante (6, 16) und der Oberfläche oder Frontseite (7, 17) ermöglichen.

4. Bauteil gemäß Anspruch 3, **dadurch gekennzeichnet, dass** es eine Treppenstufe (1) ist und die Lichtleitfasern (3) parallel zur Oberfläche (6) der Stufe (1) verlaufen und der Lichtaustritt an der Vorderkante (6) erfolgt.

5. Bauteil gemäß Anspruch 3, **dadurch gekennzeichnet, dass** die Lichtleitfasern (3, 13) unter einem Winkel zur Fläche (7, 17) verlaufen, so dass ein Lichtaustritt an der Fläche (7, 17) erfolgt.

6. Bauteil gemäß einem der Ansprüche 3 bis 5, **dadurch gekennzeichnet, dass** es eine erste, obere Schicht (1 a, 10) aus Baustoff (2, 12) mit Lichtleitfasern (3, 13) und eine zweite Schicht (1 b, 11) ohne Lichtleitfasern als Träger umfasst.

7. Bauteil gemäß Anspruche 5 oder 6, **dadurch gekennzeichnet, dass** eine zweite Beleuchtungseinrichtung (4b, 14) an der der ersten Beleuchtungseinrichtung (4a, 14) gegenüberliegenden Kante (6, 16) vorgesehen ist und die Lichtleitfasern (3, 13) unter einem solchen Winkel eingebaut sind, dass ein Lichtaustritt an der Oberfläche oder Frontseite (7, 17) und der Unterseite oder Rückseite (8, 18) erfolgt.

8. Beleuchtete Treppe mit mindestens einer Stufe, **dadurch gekennzeichnet, dass** ein Bauteil gemäß einem der Ansprüche 3 bis 7 zumindest eine Stufe bildet.
